# EUROPÄISCHE PATENTANMELDUNG

(11) **EP 1 881 208 A2**
(43) Veröffentlichungstag der Anmeldung: **23.01.2008**
(21) Anmeldenummer: 07013405.1
(22) Anmeldetag: 09.07.2007
(51) Int. Cl.: F16B 11/00, F16B 13/14, F16B 39/22

(54) **Befestigungskit und Verfahren zum Befestigen eines Schaftes in einer Halterung mittels Klebstoff**

(30) Priorität: 19.07.2006 DE 102006033442
(71) Anmelder: Saphirwerk Industrieprodukte AG, 2555 Brügg (CH)
(72) Erfinder: Bäbler, Jean, 1700 Fribourg (FR)
(74) Vertreter: DTS Zürich

(57) **Zusammenfassung**

Die vorliegende Erfindung stellt ein Kit (100) zum Befestigen eines Schaftes (3) in einer Halterung (10) einer Messvorrichtung vor, wobei das Kit (100) eine Halterung (10) umfasst, die eine Bohrung (1) aufweist, und einen Schaft (3), mit einem ersten Ende (E1) und einem zweiten Ende (E2), wobei die Bohrung (1) mindestens eine vertikal verlaufende Rille (R) aufweist. Weiter stellt die vorliegende Erfindung ein Verfahren zum Befestigen eines Schaftes (3) mittels Klebstoff (2) in der Halterung vor.

## Beschreibung

Die vorliegende Erfindung bezieht sich auf ein Befestigungskit, insbesondere bezieht sich die vorliegende Erfindung auf ein Verfahren zum Befestigen eines Schaftes zylinderförmigen Bauteils in einer Halterung mittels Klebstoff.

Prozessabläufe bei Fertigungs- oder Messabläufen werden heutzutage immer mehr automatisiert und vereinfacht.
Um beispielsweise zwei Werkstücke fest und zuverlässig miteinander zu verbinden, werden im Stand der Technik Ausführungsmöglichkeiten mittels Kleben, Verpressen, Verschweißen, Löten, etc. vorgestellt.

Allerdings tritt bei den im Stand der Technik zitierten Lösungen der Nachteil auf, dass die Lebensdauer der Werkstoffe, durch die Verbindung nachteilig beeinflusst werden kann.

Aufgabe der vorliegenden Erfindung ist es daher, bei derartigen Verbindungsarten, aufgrund der unterschiedlichen Sprödigkeit und Festigkeit der Werkstoffe, die Lebensdauer der bei der Verbindung beteiligten Werkstoffe zu verlängern und somit die wirtschaftlichen Kosten zu minimieren.

Diese Aufgabe wird durch ein Kit zum Befestigen eines Schaftes in einer Halterung gelöst.

Weitere vorteilhafte Ausgestaltungen der Erfindung sind in den abhängigen Ansprüchen angegeben.

Gemäß einem ersten Aspekt der vorliegenden Erfindung ist ein Kit (100) zum Befestigen eines Schaftes (3) in einer Halterung (10) vorgesehen, wobei das Kit (100) eine Halterung (10), die eine Bohrung (1) aufweist, und einen Schaft (3) umfasst, mit einem ersten Ende (E1) und einem zweiten Ende (E2), wobei die Bohrung (1) mindestens eine Vertiefung (G, R) in einem vorherdefinierten Bereich der Bohrung (1) aufweist.

Unter einem Kit versteht man dabei einen Satz von Einzelteilen, hier einen Schaft und eine Halterung, die gemeinsam eine Gesamteinheit ergeben.

Unter einem Befestigen versteht man, dass ein Schaft in der Halterung derart angebracht wird, dass er mit dieser bevorzugt fest und langfristig, stabil verbunden ist. Selbstverständlich ist es genauso möglich, dass die Befestigung nur für einen bestimmten Zeitabschnitt, beispielsweise für die Dauer einer Messung, andauert.

Unter einem Schaft versteht man bevorzugt einen Kolben, einen Zylinder, einen Taststift, einen Stift etc. Bevorzugt ist ein derartiger Schaft ein zylinderförmiges Bauteil aus Werkstoffen wie Hartmetall, Keramik (als übergeordneter Begriff wie Nitride, Oxide, Carbide, Boride, Ferrite, Silizide und deren Verbindungen in polykristalliner und monokristalliner Struktur), faserverstärkter Kunststoff, etc.

Die Halterung dient dazu, mit dem Schaft eine feste Verbindung herzustellen. Sie weist bevorzugt eine Vertiefung in Form einer Bohrung auf, die eine gewisse Tiefe in die Halterung hineinreicht, um den Schaft eine vorherbestimmte Länge in die Halterung einzuführen, bevorzugt 1-50 % der Gesamtlänge des Schaftes.

Eine Bohrung befindet sich in der Halterung. Sie kann eine vorherbestimmte, anwendungsspezifische Ausformung aufweisen und wird mittels eines geeigneten Werkzeuges in der Halterung, bevorzugt einem Bohrer angebracht. Darüber hinaus weist die Bohrung bevorzugt eine Vertiefung auf, die sich in einem vorherdefinierten Bereich der Mantelfläche der Bohrung befindet. Durch die erfindungsgemäße Vertiefung, welche die unterschiedlichsten Ausformungen, wie Gewinde bzw. Schraubgewinde, Innengewinde, Rille, etc. aufweisen kann und deren Verlauf ebenso beliebig auf der Mantelfläche der Bohrung ausgebildet sein kann, ergibt sich der Vorteil, dass beim nachfolgend beschriebenen erfindungsgemäßen Verfahren sich ein Klebstoff gleichmäßig bzw. gleichförmig, zwischen dem eingeführten Schaft und der Mantelfläche der Bohrung verteilen kann.

Die Bohrung weist bevorzugt in einem oberen Bereich eine zylinderförmige Form auf, in einem unteren Bereich, einem Reservoirbereich, welcher sich am meisten von der Öffnung der Bohrung beabstandet befindet, weist die Bohrung bevorzugt einen kegelförmigen Verlauf auf. Im Falle eines vorhandenen Gewindes im Inneren der Bohrung verläuft dieses bis zur oberen Öffnung der Bohrung.

Der Schaft weist sowohl ein erstes Ende, als auch ein zweites Ende auf. Das erste Ende ist von dem zweiten Ende am weitesten beabstandet und befindet sich nach einem Einführen des Schaftes in die Halterung am meisten von der Bohrung der Halterung beabstandet.

Das erste Ende ist jenes Ende, bei welchem bei dem nachfolgend vorgestellten erfindungsgemäßen Verfahren eine Kraft F angewandt wird. Das zweite Ende ist jenes Ende des Schaftes, welches in die Bohrung eingeführt wird.

Gemäß einem weiteren Aspekt der vorliegenden Erfindung ist es bevorzugt, dass die Vertiefung in einem vorherdefinierten Bereich der Bohrung mindestens ein Gewinde umfasst. Bei dem Gewinde handelt es sich bevorzugt um ein Schraubgewinde, insbesondere um ein Innengewinde, welches bevorzugt ein Sägegewinde, Rundgewinde oder Flachgewinde ist. Dabei ist es bevorzugt, dass das Gewinde lediglich in einem vorherbestimmten Bereich der Bohrung angeordnet ist oder sich über die gesamte Oberfläche der Bohrung erstreckt. Das Gewinde verläuft bevorzugt von dem Rand der Bohrung bis in den Reservoirbereich, um einen späteren Durchfluss von Klebstoff von dem Reservoirbereich über das Gewinde zu ermöglichen. Der Verlauf des Gewindes ist bevorzugt von helikaler bzw. helixförmiger Form mit einer gewissen Gewindeganghöhe, die bevorzugt gleichmäßig über die Manteloberfläche der Bohrung ausgebildet ist, allerdings auch einen unterschiedlichen Verlauf entlang der Manteloberfläche der Bohrung einnehmen kann. Durch das Merkmal einer Ausbildung des Gewindes in einem vorherdefinierten Bereich ergibt sich der Vorteil, dass die Stärke der Befestigung des Schaftes in der Halterung anwendungsspezifisch optimiert werden kann.

Gemäß einem weiteren Aspekt der vorliegenden Erfindung ist es bevorzugt, dass ein Innendurchmesser d der Bohrung (G) zu einem Außendurchmesser D des Schaftes (3) derart dimensioniert ist, dass zwischen der Bohrung und dem Schaft (3) ein formschlüssiger Halt entsteht. Als Innendurchmesser ist dabei der Abstand von einem Punkt auf der Oberfläche der Bohrung zu dem am kürzesten beabstandeten, genau gegenüberliegend Punkt auf der anderen Seite der Bohrung zu verstehen.

Als Außendurchmesser des Schaftes ist jener Durchmesser zu verstehen, den man erhält, wenn man den Schaft beispielsweise mit einer Schublehre bzw. einem Messschieber abmisst.

Da der Innendurchmesser d der Bohrung kleiner als der Außendurchmesser des Schafts ist, wobei der Unterschied im Prozentbereich liegt, bevorzugt 0,1 bis 5 %, kommt es zwischen der Bohrung und dem Schaft zu einem sogenannten formschlüssigen Halt, welcher bevorzugt bei einer späteren Verwendung eines Klebstoffs zur Befestigung des Schafts in der Bohrung herangezogen wird, da der Schaft während des Aushärtungsprozesses des Klebstoffs in der Bohrung einen festen Halt aufweist und nicht von außen bzw. extern gehalten werden muss.

Gemäß einem weiteren Aspekt der vorliegenden Erfindung ist es bevorzugt, dass die Vertiefung in der Bohrung mindestens eine Rille umfasst.

Darüber hinaus weist die Bohrung der Halterung mindestens eine Rille auf. Diese läuft bevorzugt vom oberen Rand, welcher sich bei der Öffnung der Bohrung befindet über eine gewisse, vorherdefinierte Länge in die Bohrung in Richtung des Reservoirbereichs hinein. Damit ist gewährleistet, dass in weiterer Folge bei dem erfindungsgemäßen Verfahren Klebstoff von dem Reservoirbereich über die Rillen zu dem Rand der Bohrung hin verlaufen kann.

Die Länge der mindestens einen Rille R oder einer Vielzahl von Rillen R kann dabei von einander verschieden sein. Es ist bevorzugt, dass die Rillen R eine gleiche Länge aufweisen und die Rillen in der Innenfläche der Bohrungen gleichmäßig voneinander beabstandet sind.

Darüber hinaus ist es bevorzugt, dass die Rille bzw. die Rillen in der Bohrung eine Vertiefung aufweist, die vergleichbar mit einer Tiefenprofilierung eines möglichen Gewindes ist. Die Tiefe der Rillen kann jedoch auch größer oder kleiner als die Tiefenprofilierung eines möglichen Gewindes sein.

Gemäß einem weiteren Aspekt der vorliegenden Erfindung ist es bevorzugt, dass die Vertiefung in der Bohrung mindestens eine vertikal verlaufende Rille umfasst. Durch den vertikalen Verlauf der Rille, deren Ausformung und Verlauf, bevorzugt so wie jener der vorhergehend beschriebenen Rille ist, entsteht eine weitere Stabilisierung eines erfindungsgemäß eingeklebten Schaftes in der Halterung.

Gemäß einem weiteren Aspekt der vorliegenden Erfindung ist es bevorzugt, dass die Bohrung (1) in ihrem unteren Bereich bzw. Reservoirbereich eine kegelförmige Ausformung (K) aufweist. Die kegelförmige Ausformung kann mit einem bestimmten Bohrer hergestellt werden und weist den Vorteil auf, dass nach einem Einführen des Schaftes in die Bohrung der Halterung, das zweite Ende des Schaftes den Boden der Bohrung nicht berührt, somit verbleibt ein Luftspalt in dem unteren Ende der Bohrung, welcher in weiterer Folge bei dem erfindungsgemäßen Verfahren dazu dient, ausreichend Klebstoff in der Bohrung aufzunehmen und diesen während des erfindungsgemäßen Verfahrens in der Bohrung, dem Gewinde und vertikalen Rillen der Bohrung gleichmäßig zu verteilen.

Gemäß einem weiteren Aspekt der vorliegenden Erfindung ist es bevorzugt, dass der Schaft eine zylinderförmige Ausformung aufweist und das zweite Ende (E2) kegelstumpfförmig ausgeformt ist. Die zylinderförmige Ausformung des Schaftes weist den Vorteil auf, dass dieser auf einfache Weise in die Bohrung der Halterung eingeführt werde kann. Das kegelstumpfförmige Aussehen des Schaftes bewirkt, dass, wie vorhergehend bereits erwähnt, nach dem vollständigen Einführen des Schaftes in die Bohrung, ein Luftspalt zwischen dem zweiten Ende und dem Boden der Bohrung verbleibt, welcher später als mögliches Reservoir für den Klebstoff dient.

Die Aufgabe der Erfindung wird auch durch ein Verfahren zum Befestigen eines Schaftes (3) in einer Halterung (10)gelöst, wobei das Verfahren die folgenden Schritte umfasst:
Einbringen einer vorherdefinierten Menge eines Klebstoffes (2) in eine Bohrung (1) einer Halterung (10);
Einbringen eines zweiten Endes (E2) des Schaftes (3) in die Bohrung (1) mit einer vorherbestimmten Kraft (F).

Unter dem Schritt des Einbringens einer vorherdefinierten Menge eines Klebstoffes in eine Bohrung einer Halterung versteht man, dass ein Nutzer manuell oder automatisiert, eine bestimmte Menge an Klebstoff in die Bohrung der Halterung einführt. Der Klebstoff kann dabei bevorzugt in flüssiger Form oder auch in Form von Klebstoff-Kapseln eingefügt werden, die später nach einem Einfügen des Schaftes platzen, da sie aufgrund ihrer Geometrie den Schaft vorübergehend berühren.

Bei dem Klebstoff handelt es sich bevorzugt um einen Kunststoffklebstoff, ein Epoxydharz oder heißes Lot und Metall, welches in die Bohrung eingebracht wird. Der Klebstoff stellt bevorzugt zwischen Werkstoffen mit unterschiedlichen Materialeigenschaften eine entsprechende zuverlässige Verbindung dar, die sich auf die späteren Eigenschaften eines Taststiftes, welcher sich aus einem Schaft in einer Bohrung zusammensetzt, auswirkt.
Unter dem Schritt des Einbringens eines zweiten Endes (E2) des Schaftes (3) in die Bohrung (1), mit einer vorherbestimmten Kraft (F) versteht man, dass nach dem Einbringen des Klebstoffs der Schaft automatisiert oder manuell durch den Nutzer in die Bohrung eingeführt wird, dabei wird eine vorherbestimmte bestimmte Kraft auf den Schaft ausgeübt. Durch das Einbringen des Schaftes in die Bohrung kommt es zu einem Verteilen des Klebstoffes über die Vertiefung, beispielsweise läuft der Klebstoff über Rillen vom Reservoirbereich über die Manteloberfläche der Bohrung an den Außenbereich der Halterung.

Gleichzeitig ist soviel Klebstoff in die Bohrung eingebracht, dass zunächst das zweite Ende, später ein weiterer Oberflächenbereich des Schaftes, den Klebstoff berühren, der aufgrund der ausgeübten Kraft F mehr und mehr aus der kegelförmigen Vertiefung der Bohrung verdrängt wird. Bevorzugt entspricht die Kunststoffmenge dem Differenzvolumen zwischen dem Volumen der Bohrung und dem möglichen Volumen des Schaftes, welches in der Bohrung aufgenommen werden kann. In diesem Fall würde der Klebstoff bis zur oberen Kante der Bohrung reichen und würde somit alle Gewindebohrungen und Rillen vollständig schließen.

Gemäß einem weiteren Aspekt der vorliegenden Erfindung ist es bevorzugt, dass die Richtung der auf das zweite Ende (E2) des Schaftes (3) aufgebrachten Kraft (F) parallel zur Längsachse des Schaftes (3) verläuft. Damit ergibt sich der Vorteil, dass der Schaft mit der Bohrung der Halterung nicht verkantet und senkrecht zur Ebene der Bohrungsöffnung verläuft, womit die Genauigkeit der später durchgeführten Messungen erhöht wird.

Gemäß einem weiteren Aspekt der vorliegenden Erfindung ist es bevorzugt, dass die Kraft (F) an dem ersten Ende (E1) des Schaftes (3) ausgeübt wird. Dadurch ergibt sich der Vorteil, dass es zu einer optimalen Kraftübertragung über den Schaft auf den Reservoirbereich mit dem Klebstoff kommt und der Klebstoff entsprechend in der Bohrung verteilt wird.

Verfahren gemäß den vorhergehenden Verfahrensansprüchen, wobei die Kraft (F) mit einer externen Vorrichtung (E) ausgeübt wird. Eine externe Vorrichtung ist bevorzugt eine automatisierte Vorrichtung, die eine vorherdefinierte Kraft auf den Schaft ausübt. Dadurch ergibt sich der Vorteil, dass die Anbringung des Schaftes mittels Klebstoff in der Halterung automatisiert und vereinfacht werden kann und somit das Verfahren kosten- und zeitsparend wird.

Gemäß einem weiteren Aspekt der vorliegenden Erfindung ist es bevorzugt, dass die externe Vorrichtung (E) solange auf den Schaft (3) eine Kraft (F) einwirken lässt, bis der Klebstoff (2) ausgehärtet ist. Dadurch ergibt sich der Vorteil, dass nach einem Loslassen des Schaftes durch die externe Vorrichtung, der Schaft nicht mehr bewegt und verschoben werden kann und somit, wie bereits erwähnt, senkrecht zur Ebene der Bohrungsöffnung verläuft.

Gemäß einem weiteren Aspekt der vorliegenden Erfindung ist es bevorzugt, dass der Klebstoff aus der Gruppe stammt, die umfasst: Cyanacrylatklebstoff, Methylmethacrylatklebstoff, anaerob härtender Klebstoff, ungesättigte Polyester (UP-Harze), strahlenhärtender Klebstoff,
Polykondensationsklebstoff, Phenolformaldehydklebstoff, Silikonklebstoff, silanvernetzender Polymerklebstoff, Polyimidklebstoff, Polyadditionsklebstoff, Epoxidklebstoff, Polyurethanklebstoff, Polymerisationsklebstoff, Haftklebstoff, Schmelzklebstoff, lösemittelhaltiger Klebstoff, Nassklebstoff, Kontaktklebstoff, Dispersionsklebstoff, wasserbasierter Klebstoff, Plastisol, Kunststoffklebstoff, Epoxydharz, heißes Lot, Adhäsionsklebstoff. Dabei ist es bevorzugt, dass mindestens ein Klebstoff der vorhergehend genannten Klebstoffe oder eine Kombination dieser Klebstoffe in die Bohrung eingefügt wird. Ebenso ist es möglich, dass der Klebstoff in Form einer Kapsel in die Bohrung eingefügt wird und diese Kapsel nach einem Einführen des Schaftes platzt und sich der Klebstoff in weiterer Folge in der Bohrung der Halterung gleichmäßig verteilt.

Weiter ist es bevorzugt, dass unter dem Klebstoff ein Material bzw. ein Mittel verstanden werden kann, welches entsprechende Werkstücke, also Schaft und Bohrung der Haltevorrichtung, sowie das darin angeordnete Gewinde bzw. die Rille miteinander verbindet, d.h. der Klebstoff stellt zwischen den Oberflächen der miteinander zu verbindenden Werkstücke eine entsprechende Verbindung dar. Wie bereits vorhergehend erwähnt, muss es sich bei dem Klebstoff nicht um einen Klebstoff im herkömmlichen Sinne handeln, wie beispielsweise einem Klebstoff auf Kunststoffbasis, sondern es kann bevorzugt auch heißes Lot und Metall verwendet werden, welches aufgrund seiner Legierung eine entsprechende zuverlässige und feste Verbindung zwischen dem Schaft und der Haltevorrichtung herstellt.

Darüber hinaus ist es bevorzugt, dass der Klebstoff mittels geeigneter Vorrichtungen ausgehärtet, besonders bevorzugt thermisch ausgehärtet wird, um den Aushärtungsprozess des Klebstoffs zu beschleunigen.

Bevorzugte Ausführungsformen der Erfindung werden nachfolgend anhand der beigefügten Zeichnung näher erläutert.

Figur 1 zeigt den Ablauf der Verfahrensschritte (S1 bis S3) zum Befestigen eines Schaftes in einer Halterung.

Figur 2 zeigt eine Detailansicht des in der Bohrung verteilten Klebstoffs und angebrachten Schaftes.

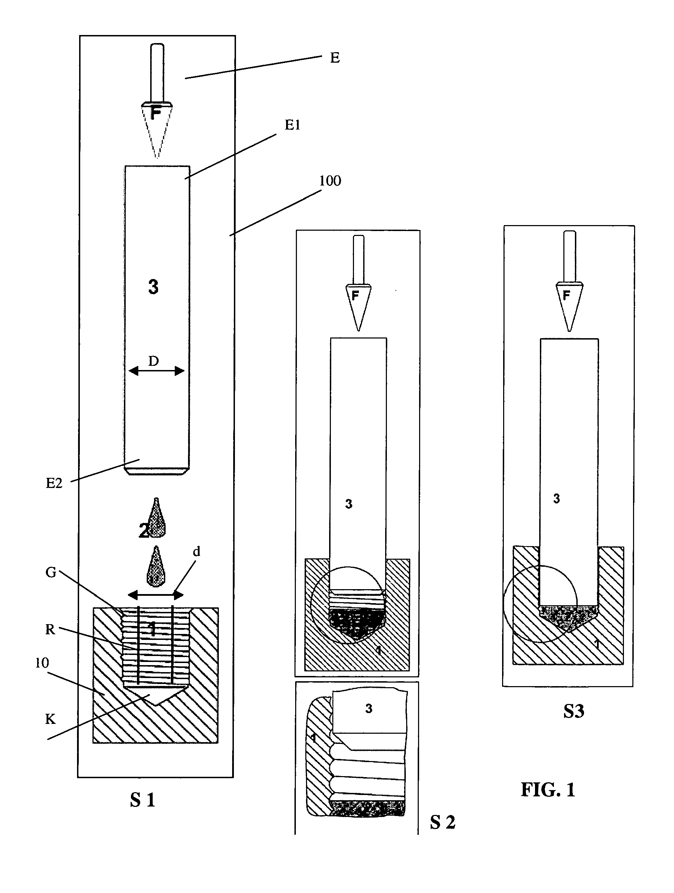

In **Figur 1** ist ein Kit 100 zum Befestigen eines Schaftes 3 aus Metallschaum in einer Bohrung 1 einer Halterung 10 aus Edelstahl mittels eines Klebstoffs 2 dargestellt.

Im ersten Schritt S1 der Fig. 1 ist dargestellt, dass zunächst ein Klebstoff 2, in dem Ausführungsbeispiel ein Sekundenkleber mit der chemischen Verbindung Cyanacrylat, in die Bohrung 1 eingetropft wird. Dabei wird eine Menge von 10 ml verwendet.

Die Bohrung 1 weist ein Volumen von 100 ml auf und ist in ihrem oberen Bereich zylindrisch mit einem Innengewinde G in Form eines Rundgewindes ausgebildet. Das Innengewinde verläuft dabei entlang der Manteloberfläche der Bohrung 1 von dem Rand der Bohrung bis in den unteren Bereich bzw. Reservoirbereich der Bohrung, der eine kegelförmige Ausformung K aufweist. Das Gewinde weist einen gleichmäßig verteilten helixförmigen Gewindegang auf. Dabei ist erkennbar, dass das Gewinde G lediglich im linken Teil der Bohrung der Fig. 1 ausgebildet ist, während im rechten Teil der Bohrung 1 keine Profilierung durch das Gewinde erkennbar ist.

Darüber hinaus verfügt die Bohrung über acht vertikal verlaufende Rillen R, wobei hier in der Figur 1 nur zwei vertikal verlaufende Rillen R dargestellt sind. Die Rillen weisen eine Länge von 25 mm und eine Tiefe von 0,5 mm auf.

Der zylinderförmige Schaft 3 weist eine Länge von 100 mm und eine Breite von 15 mm auf. An seinem zweiten Ende E2 weist der Schaft eine kegelstumpfförmige Ausformung auf.

Darüber hinaus ist im ersten Schritt S1 der Fig. 1 dargestellt, dass mittels einer externen Vorrichtung E, einer automatisierten Vorrichtung in Form eines Roboters, eine Kraft F parallel zur Längsachse des Schaftes 3 in Richtung der Bohrung 1 ausgeübt wird.

Im zweiten Schritt S2 des Verfahrens ist in der oberen Ansicht dargestellt, wie der Schaft 3 mit der Kraft F kontinuierlich mit einer gewissen Geschwindigkeit in die Bohrung 1 eingeführt wird. Der Schaft 1 hat dabei den Klebstoff 2, der sich in dem Reservoirbereich verteilt, noch nicht berührt und daher noch nicht verdrängt. Die Füllhöhe des Klebstoffs reicht in diesem Ausführungsbeispiel bis zum dritten Gewindegang, sodass auch der untere Teil des kegelförmigen Ausschnittes der Bohrung vollständig mit Klebstoff bedeckt ist.

Eine Detailansicht, welche kreisförmig in dem oberen Diagramm des zweiten Schrittes S2 dargestellt ist, ist dazu in dem unteren Diagramm bei S2 dargestellt. Es sind dabei die kegelstumpfförmige Form des zweiten Endes E2 Schaftes 3 erkennbar, der Verlauf des Gewindes entlang der Manteloberfläche der Bohrung 1, sowie die Füllhöhe des Klebstoffs 2.

Abschließend ist im dritten Schritt S3 der Figur 1 dargestellt, dass der Schaft 3 sukzessive in die Bohrung 1 der Halterung eingeführt worden ist und somit den Klebstoff vollständig in die Gewindegänge des Innengewindes sowie in die Rillen, hier nicht dargestellt, verdrängt hat. In diesem Schritt wird die Kraft F weiterhin durch die externe Vorrichtung E ausgeübt bis der Klebstoff 2 ausgehärtet ist, dann wird die externe Vorrichtung von dem Schaft wegbewegt (nicht dargestellt) und ein neuer Schaft 3 kann in einer weiteren Halterung 10 befestigt werden.

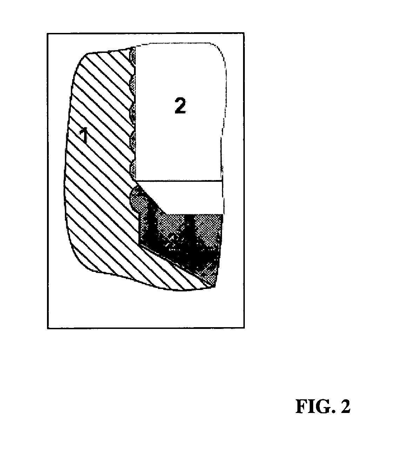

Eine Detailansicht wird kreisförmig im dritten Schritt S3 der Fig. 1 dargestellt, welche in **Figur 2** dargestellt ist.

In Fig. 2 ist deutlich erkennbar, dass der Klebstoff die linken seitlichen Gewindegänge der Bohrung sowie die vertikal verlaufenden Rillen (hier nicht dargestellt) ausfüllt. Dabei verläuft der Klebstoff über den Reservoirbereich helixförmig entlang der Gewindegänge an dem zweiten kegelstumpfförmigen Ende E2 die Gewindegänge entlang bis er die Oberfläche der Halterung erreicht der Zwischenraum zwischen der Bohrung und dem Schaft vollständig und gleichmäßig verteilt ist, wobei ebenso verhindert oder vermieden wird, dass sich noch Gas- oder Luftblasen in dem Klebstoff befinden, welche in weiterer Folge nach einem Aushärten des Klebstoffs die Stabilität der Klebeverbindung beeinflussen.

Diese vollständige Ausfüllung der Zwischenräume in diesem Ausführungsbeispiel, also der linken Gewindegänge und der vertikalen Rillen, mit Klebstoff 2 dazu führt, dass das untere Teilstück des Schaftes 3 mit dem zweiten Ende E2 vollständig mit Klebstoff umgeben ist, welcher in weiterer Folge aushärtet und das untere Teilstück des Schaftes 3 fest umschließt und in der Halterung stabilisiert.

Durch die erfindungsgemäße Vorrichtung sowie das erfindungsgemäße Verfahren ergibt sich somit der Vorteil, dass ein Schaft, beispielsweise aus porösem Werkstoff, auf einfache und kostengünstige Weise mit einer Bohrung einer Halterung befestigt werden kann und somit die Genauigkeit eines Messgerätes, welches den derart befestigten Schaft aufweist, erhöht wird.

### Bezugszeichenliste

- 1: Bohrung
- 2: Klebstoff
- 3: Schaft

- 10: Halterung

- 100: Kit

- D: Außendurchmesser des Schaftes
- d: Innendurchmesser der Bohrung

- E: externe Vorrichtung
- E1: erstes Ende des Schaftes 3
- E2: zweites Ende des Schaftes 3

- F: Kraft

- G: Gewinde

- K: kegelförmige Ausformung der Bohrung

- R: vertikale Rille

## Patentansprüche

1. Kit (100) zum Befestigen eines Schaftes (3) mittels Klebstoff in einer Halterung (10) eines Messgerätes, wobei das Kit (100) umfasst:
a. eine Halterung (10), die eine Bohrung (1) aufweist, und
b.einen Schaft (3), mit einem ersten Ende (E1) und einem zweiten Ende (E2), wobei das zweite Ende (E2) in die Bohrung (1) einführbar ist,
c. und wobei die Bohrung (1) mindestens eine Vertiefung (G, R) in einem vorherdefinierten Bereich der Bohrung (1) aufweist.

2. Kit (100) gemäß Anspruch 1, wobei die Vertiefung mindestens ein Gewinde (G) umfasst.

3. Kit (100) gemäß Anspruch 1, wobei die Vertiefung mindestens eine Rille (R) umfasst.

4. Kit (100) gemäß Anspruch 3, wobei die Rille (R) vertikal verläuft.

5. Kit (100) gemäß den vorhergehenden Ansprüchen, wobei die Bohrung (1) einen Reservoirbereich mit einer kegelförmigen Ausformung (K) aufweist.

6. Kit (100) gemäß den vorhergehenden Ansprüchen, wobei der Schaft eine zylinderförmige Ausformung aufweist und dessen zweites Ende (E2) kegelstumpfförmig ausgeformt ist.

7. Verfahren zum Befestigen eines Schaftes (3) gemäß den vorhergehenden Vorrichtungsansprüchen in einer Halterung (10), wobei das Verfahren die folgenden Schritte umfasst: Einbringen einer vorherdefinierten Menge eines Klebstoffes (2) in eine Bohrung (1) einer Halterung (10); Einbringen eines zweiten Endes (E2) des Schaftes (3) in die Bohrung (1) mit einer vorherbestimmten Kraft (F).

8. Verfahren gemäß dem vorhergehenden Verfahrensanspruch, wobei die Kraft (F) an dem ersten Ende (E1) des Schaftes (3) ausgeübt wird.

9. Verfahren gemäß den vorhergehenden Verfahrensansprüchen, wobei die Kraft (F) mit einer externen Vorrichtung (E) ausgeübt wird.

10. Verfahren gemäß den vorhergehenden Verfahrensansprüchen, wobei die Richtung der auf das erste Ende (E1) des Schaftes (3) aufgebrachten Kraft (F) parallel zur Längsachse des Schaftes (3) verläuft.

11. Verfahren gemäß den vorhergehenden Verfahrensansprüchen, wobei die Kraft (F) solange ausgeübt wird, bis der Klebstoff (2) ausgehärtet ist.

12. Verfahren gemäß den vorhergehenden Verfahrensansprüchen, wobei der Klebstoff aus der Gruppe stammt, die umfasst: Cyanacrylatklebstoff, Methylmethacrylatklebstoff, anaerob härtender Klebstoff, ungesättigte Polyester (UP-Harze), strahlenhärtender Klebstoff, Polykondensationsklebstoff, Phenolformaldehydklebstoff, Silikonklebstoff, silanvernetzender Polymerklebstoff, Polyimidklebstoff, Polyadditionsklebstoff, Epoxidklebstoff, Polyurethanklebstoff, Polymerisationsklebstoff, Haftklebstoff, Schmelzklebstoff, lösemittelhaltiger Klebstoff, Nassklebstoff, Kontaktklebstoff, Dispersionsklebstoff, wasserbasierter Klebstoff, Plastisol, Adhäsionsklebstoff, Kunststoffklebstoff, Polymerklebstoff, heißes Lot, Epoxydharz oder eine Kombination dieser Klebstoffe umfasst.
